# EUROPEAN PATENT SPECIFICATION

(11) **EP 3 045 425 B1**
(45) Date of publication and mention of the grant of the patent: **06.11.2019**
(21) Application number: 14842447.6
(22) Date of filing: 08.09.2014
(51) Int. Cl.: C10L 3/08, C01B 3/26

(54) **MANUFACTURING DEVICE AND MANUFACTURING METHOD FOR HYDROGEN AND SYNTHETIC NATURAL GAS**
VORRICHTUNG UND VERFAHREN ZUR HERSTELLUNG VON WASSERSTOFF UND SYNTHETISCHEM ERDGAS
DISPOSITIF DE PRODUCTION ET PROCÉDÉ DE PRODUCTION D'HYDROGÈNE ET DE GAZ NATUREL SYNTHÉTIQUE

(30) Priority: 09.09.2013 JP 2013185894; 09.09.2013 JP 2013185895
(43) Date of publication of application: 20.07.2016
(73) Proprietor: Chiyoda Corporation, Kanagawa 220-8765 (JP)
(72) Inventor: IKEDA, Osamu, Yokohama-shi Kanagawa 220-8765 (JP); SHIRASAKI, Tomohiko, Yokohama-shi Kanagawa 220-8765 (JP); OKADA, Yoshimi, Yokohama-shi Kanagawa 220-8765 (JP); IMAGAWA, Kenichi, Yokohama-shi Kanagawa 220-8765 (JP)
(74) Representative: Dehns
(86) International application number: PCT/JP2014/004605
(87) International publication number: WO 2015/033583

(56) References cited:
- EP-A1- 2 543 743
- CN-A- 102 660 340
- JP-A- H0 551 587
- JP-A- H06 248 275
- JP-A- H07 166 179
- JP-A- 2005 177 624
- JP-A- 2007 513 044
- JP-A- 2008 525 448
- JP-A- 2011 225 969
- JP-A- 2013 049 601
- US-A- 4 073 716
- Maria Sudiro ET AL: "Synthetic Natural Gas (SNG) from coal and biomass: a survey of existing process technologies, open issues and perspectives", , 18 August 2010 (2010-08-18), XP055334413, ISBN: 978-953-30-7112-1 Retrieved from the Internet: URL:http://cdn.intechopen.com/pdfs/11472/I nTech-Synthetic_natural_gas_sng_from_coal_ and_biomass_a_survey_of_existing_process_t echnologies_open_issues_and_perspectives.p df [retrieved on 2017-01-11]

## Description

### TECHNICAL FIELD

The present invention relates to a system and a method for production of hydrogen and synthetic natural gas.

### BACKGROUND ART

In recent years, owing to a growing trend to reduce the emission of carbon dioxide gas which is known as a cause of global warming, the use of hydrogen energy is drawing attention. As a source of hydrogen, the hydrogen supply chain using the organic hydride process is considered to be promising. In the organic hydride process, hydrogen in gas form is added to an aromatic compound as a chemical process (an aromatic compound is hydrogenated) to produce a hydrogenated aromatic compound (organic hydride). As hydrogenated aromatic compound is typically in liquid form under an ambient temperature and pressure condition, the storage and transportation of hydrogen can be performed both easily and safely. According to this process, hydrogen is converted into a hydrogenated aromatic compound at the site of hydrogen production, and transported in the form of the hydrogenated aromatic compound. The hydrogenated aromatic compound is separated into the aromatic compound and the hydrogen in a plant or a hydrogen station situated adjacent to a hydrogen user such as a city. The aromatic compound separated by the dehydrogenation reaction is transported back to the hydrogen production site to be used for the hydrogenation reaction once again.

Even though efficient transportation of hydrogen energy can be accomplished in this manner, because of the different combustion property of hydrogen from those of hydrocarbon fuels, the existing combustion devices may not be used for burning hydrogen. Therefore, in promoting the use of hydrogen energy, new devices designed for burning hydrogen must be introduced. In view of this fact, the inventors have noted the fact that the hydrogen may be converted into a synthetic natural gas (substitute natural gas) consisting mainly of methane by a methanation reaction of the hydrogen with recycled carbon dioxide gas. By thus converting the hydrogen into synthetic natural gas, the existing devices for using other fossil fuels can be used for utilizing hydrogen energy.

Because the dehydrogenation reaction of a hydrogenated aromatic compound is an endothermic reaction, external heat supply is required. It has been proposed to use an electric power generator or an engine that are provided in association with the hydrogen production system (dehydrogenation system) for performing the dehydrogenation reaction as a heat source, and to perform a heat exchange between the exhaust gas expelled from the electric power generator or the engine and the hydrogen production system. See Patent Documents 1 and 2. Thus, the waste heat from the power generator can be used for a useful purpose so that the energy efficiency of the overall system including the hydrogen supply facilities and the power generator can be improved.

The heat available for the dehydrogenation reaction is not limited to the combustion heat produced by the combustion of fuels. For instance, in a synthetic natural gas production system that produces synthetic natural gas from hydrogen and carbon dioxide by a reverse water-gas shift reaction and a methanation reaction, because the methanation reaction is an exothermic reaction, the heat from the methanation reaction can also be used. See Patent Document 3, for example. Patent Document 4 also discloses methanation of carbon dioxide to provide synthetic natural gas.

### PRIOR ART DOCUMENT(S)

### PATENT DOCUMENT(S)

[Patent Document 1] JP2013-49601A
[Patent Document 2] JP2010-77817A
[Patent Document 3] EP 2 543 743 A1
[Patent Document 4] CN 102 660 340 A (equivalent to EP 2 843 030 A1)

### SUMMARY OF THE INVENTION

### TASK TO BE ACCOMPLISHED BY THE INVENTION

In view of such problems of the prior art and a recognition by the inventors, a primary object of the present invention is to improve the heat efficiency of a hydrogen and synthetic natural gas production system including a synthetic natural gas production system for producing synthetic natural gas from hydrogen and carbon dioxide by using a reverse shift reaction and a methanation reaction, and a hydrogen production system for producing hydrogen from a hydrogenated aromatic compound by a dehydrogenation reaction.

A second object of the present invention is to limit the emission of carbon dioxide associated with electric power generation in an energy supply system (hydrogen and synthetic natural gas production system) for supplying both hydrogen and electric power.

### MEANS TO ACCOMPLISH THE TASK

To achieve such objects, the present invention provides a system (1) for production of hydrogen and synthetic natural gas, comprising: a synthetic natural gas production unit (2) for producing synthetic natural gas from hydrogen and carbon dioxide by a reverse shift reaction and a methanation reaction; and a hydrogen production unit (3) for producing hydrogen from a hydrogenated aromatic compound by a dehydrogenation reaction; wherein heat is supplied from the synthetic natural gas production unit to the hydrogen production unit so that a reaction heat of the methanation reaction which is an exothermic reaction is used for the dehydrogenation reaction which is an endothermic reaction; characterized in that the synthetic natural gas production unit (2) includes high temperature and low temperature units (11, 12) as described below; wherein the hydrogen production unit includes an evaporator (21), a heater (22) and a dehydrogenation reaction unit (23) as defined hereinafter; and wherein the system further comprises heat exchangers (4, 5) as defined hereinafter.

Thus, the hydrogen production unit receives heat generated by the synthetic natural gas production unit so that the received heat may be used for the dehydrogenation reaction. More specifically, a large part of the heat that is required from the dehydrogenation reaction in the hydrogen production unit can be obtained from the heat generated by the synthetic natural gas production unit so that the need for a supply of heat from outside can be minimized. In this manner, the system for production of hydrogen and synthetic natural gas is able to reduce the consumption of energy and the emission of carbon dioxide. Also, by burning the produced synthetic natural gas and hydrogen to make up for any deficiency in the necessary heat, the system for production of hydrogen and synthetic natural gas can minimize the emission of carbon dioxide.

In this invention, it is arranged such that the synthetic natural gas production unit includes a high temperature synthetic natural gas production unit (11) for performing the reverse shift reaction and the methanation reaction at a high temperature and a low temperature synthetic natural gas production unit (12) for performing the reverse shift reaction and the methanation reaction at a low temperature lower than the high temperature, the low temperature synthetic natural gas production unit being connected downstream in series with the high temperature synthetic natural gas production unit.

Thus, the heat utilization efficiency can be improved while the reaction speed and the yield in the production of the synthetic natural gas are improved. Because the methanation reaction is an exothermic reaction and an equilibrium reaction, the yield of methane (natural gas) can be increased by lowering the reaction temperature. However, the lowering of the reaction temperature causes a reduction in the reaction speed, and a reduction in the heat that can be recovered at a high temperature suitable for use for the dehydrogenation reaction decreases. As the hydrogen production unit operates at a high temperature, if the operating temperature of the synthetic natural gas production unit is comparatively low, it becomes difficult to heat the hydrogen production unit to a desired operating temperature by the heat supplied by the synthetic natural gas production unit, and creates a need to heat the hydrogen production unit by using other means. Therefore, by raising the reaction temperature in the high temperature SNG reaction unit, not only the reaction speed is increased but also the heat that can be recycled from the synthetic natural gas production unit to the hydrogen production unit can be increased so as to promote the rise in the temperature of the hydrogen production unit. Meanwhile, in the low temperature SNG reaction unit, by lowering the reaction temperature, the equilibrium can be shifted toward the production side (the side for producing methane) so that the yield of methane can be increased. By thus dividing the unit for performing the reverse shift reaction and the methanation reaction into two parts, the high temperature SNG production unit and the low temperature SNG production unit, both an increase in the supply of heat to the hydrogen production unit and an increase in the yield of the synthetic natural gas can be achieved at the same time.

In this invention, the high temperature synthetic natural gas production unit performs the reactions at the high temperature of 350 °C to 500 °C, and the low temperature synthetic natural gas production unit performs the reactions at the low temperature of 250 °C to 350 °C.

According to this arrangement, the efficiency of recovering heat from the synthetic natural gas production unit to the hydrogen production unit can be improved, and the reaction speed and the yield of the synthetic production unit can be improved at the same time.

In this invention, the system may further comprise an electric power generator (107) for converting energy produced by combustion of fossil fuel into electric power; wherein the synthetic natural gas production unit produces synthetic natural gas by the reverse shift reaction and the methanation reaction of carbon dioxide contained in exhaust gas released by combustion in the electric power generator and hydrogen produced by the hydrogen production unit; and the power generator is configured to burn the synthetic natural gas produced by the synthetic natural gas production unit along with the fossil fuel.

According to this arrangement, because the methane is produced by the methanation reaction using the hydrogen produced by the hydrogen production unit and the carbon dioxide contained in exhaust gas released by the electric power generator, the emission of carbon dioxide from the energy supply system can be minimized. In particular, by using the entire amount of the carbon dioxide that is released by the electric power generator, the emission of carbon dioxide can be reduced to zero. In such a case, an electric power generator that is suitable for burning hydrogen is required. However, by converting the hydrogen and the carbon dioxide into synthetic natural gas (methane) by the methanation reaction, a more conventional electric power generator suitable for burning fossil fuel can be used so that a significant saving in cost and technical resources can be achieved. Thereby, a large amount of hydrogen can be utilized. Also, because the methane produced by the synthetic natural gas production unit is used as a part of the fuel, the amount of fossil fuel that is required to be used by the electric power generator for fossil fuel can be reduced. Because the methanation reaction is an exothermic reaction, the heat generated by the methanation reaction can be utilized for the dehydrogenation reaction which is an endothermic reaction so that the need for extra heat for the hydrogenation reaction can be minimized. In other words, the heat generated by the methanation reaction can be effectively utilized, and the overall energy consumption of the energy supply system can be reduced.

In the present invention, the electric power generator may be configured to burn a mixture of the hydrogen produced by the hydrogen production unit and the fossil fuel.

According to this arrangement, the consumption of fossil fuel can be minimized by using the hydrogen as a part of the fuel that is used by the electric power generator.

In this invention, it may be arranged such that the synthetic natural gas production unit is configured to produce carbon monoxide from the carbon dioxide contained in the exhaust gas and the hydrogen produced by the hydrogen production unit by the reverse shift reaction, and to produce synthetic natural gas from at least one of the carbon dioxide contained in the exhaust gas and the carbon monoxide produced by the reverse shift reaction, and the hydrogen produced by the hydrogen production unit by the methanation reaction.

According to this arrangement, because the reverse shift reaction is performed before the methanation reaction to produce carbon monoxide from carbon dioxide, the yield of methane in the methanation reaction can be increased.

In this invention, the system may further comprise a carbon dioxide separation unit (108) for separating nitrogen from the exhaust gas and recovering carbon dioxide therefrom; wherein the carbon dioxide separated from the nitrogen by the carbon dioxide separation unit is supplied to the synthetic natural gas production unit.

According to this arrangement, because the carbon dioxide freed from nitrogen and other components of the exhaust gas is supplied to the synthetic natural gas production unit, the yield of the synthetic natural gas can be increased.

In this invention, the fossil fuel may comprise natural gas.

According to this arrangement, because the natural gas mainly consists of methane, supplying the methane from the synthetic natural gas production unit to the electric power generator causes little change to the fuel property of the electric power generator so that the electric power generator is enabled to maintain a stable combustion at all times.

Another aspect of the present invention provides a method for production of hydrogen and synthetic natural gas, comprising: an synthetic natural gas production step for producing synthetic natural gas from hydrogen and carbon dioxide by a reverse shift reaction and a methanation reaction; and a hydrogen production step for producing hydrogen from a hydrogenated aromatic compound by a dehydrogenation reaction; wherein, in the synthetic natural gas production step, reaction heat produced by the methanation reaction which is an exothermic reaction is supplied to the hydrogen production step to be used for the dehydrogenation reaction which is an endothermic reaction. The method of the present invention may further comprise an electric power generation step for converting energy obtained by combustion of fossil fuel into electric power; wherein the synthetic natural gas production step is adapted to produce synthetic natural gas by the reverse shift reaction and the methanation reaction of carbon dioxide contained in exhaust gas produced by combustion in the electric power generation step and hydrogen produced by the hydrogen production step; and the electric power generation step is adapted to burn the synthetic natural gas produced by the synthetic natural gas production unit along with the fossil fuel.

### EFFECT OF THE INVENTION

Thus, according to the present invention, heat can be supplied to the dehydrogenation reaction while limiting the emission of carbon dioxide.

### BRIEF DESCRIPTION OF THE DRAWINGS

Figure 1 is a block diagram of a hydrogen and synthetic natural gas production system given as a first embodiment of the present invention;
Figure 2 is a block diagram of an energy supply system given as a second embodiment of the present invention; and
Figure 3 is a block diagram of an energy supply system given as a third embodiment of the present invention.

### MODES OF CARRYING OUT THE INVENTION

### (First Embodiment)

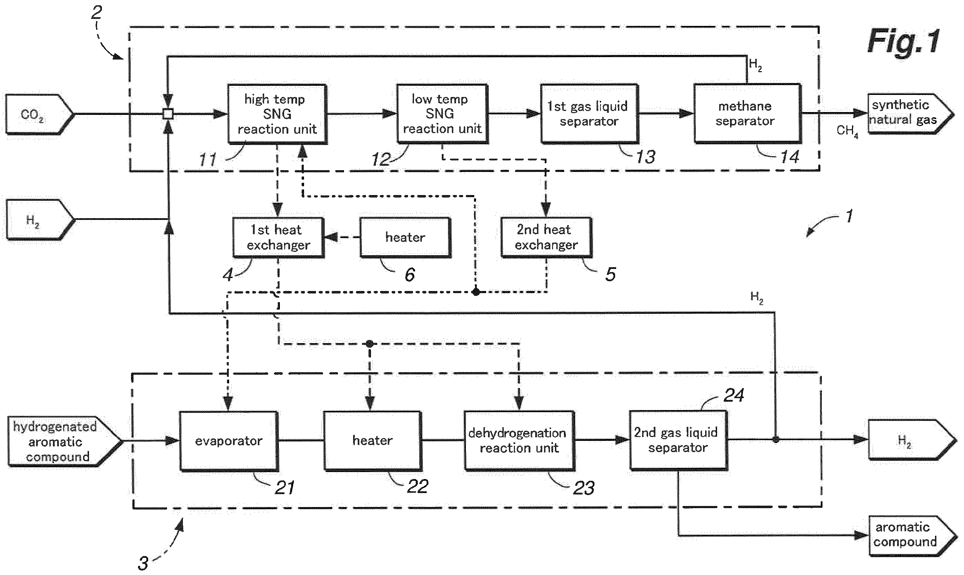

A hydrogen and synthetic natural gas production system given as a first embodiment of the present invention is described in the following with reference to the appended drawings. Figure 1 is a block diagram of the hydrogen and synthetic natural gas production system of the first embodiment of the present invention.

As shown in Figure 1, the hydrogen and synthetic natural gas production system 1 comprises a synthetic natural gas production unit 2, a hydrogen production unit 3, a first and a second heat exchanger 4 and 5 for exchanging heat between the synthetic natural gas production unit 2 and the hydrogen production unit 3, and a heater 6 for supplying heat to the first heat exchanger 4. The hydrogen and synthetic natural gas production system 1 receives supplies of carbon dioxide, a hydrogenated aromatic compound (organic hydride) and hydrogen, and supplies the hydrogen and the synthetic natural gas to the outside. The hydrogen and synthetic natural gas production system 1 may do away with an external supply of hydrogen by using the hydrogen produced by the hydrogen production unit 3 as the material for producing synthetic natural gas.

The hydrogenated aromatic compound is a product of a hydrogenation reaction of an aromatic compound, and may consist of any hydrogenated aromatic compounds that are inherently stable and capable of being dehydrogenated into stable aromatic compounds. The aromatic compound may include, but is not limited to, monocyclic aromatic compounds such as benzene, toluene and xylene, bicyclic aromatic compounds such as naphthalene, tetralin and methylnaphthalene, and tricyclic aromatic compounds such as anthracene, and these compounds may be used individually or as a mixture of two or more of such components. The hydrogenated aromatic compound is obtained by the hydrogenation of any of such aromatic compounds, and may include, but is not limited to, monocyclic hydrogenated aromatic compounds such as cyclohexane, methylcyclohexane and dimethylcyclohexane, bicyclic hydrogenated aromatic compounds such as tetralin, decalin and methyl decalin, and tricyclic hydrogenated aromatic compounds such as tetradecahydroanthracene, and these compounds may be used individually or as a mixture of two or more of such compounds. The aromatic compound is preferably selected from those that are in stable liquid form under an ambient temperature and pressure condition. Among the various aromatic compounds and hydrogenated aromatic compounds, methylcyclohexane is preferred as the hydrogenated aromatic compound, and toluene that can be obtained by the dehydrogenation of methylcyclohexane is preferred as the aromatic compound.

The synthetic natural gas (SNG) or the substitute natural gas is a synthesized gas intended as a substitute for the natural gas, and mainly consists of methane.

The synthetic natural gas production unit 2 comprises a high temperature SNG reaction unit 11, a low temperature SNG reaction unit 12, a first gas liquid separator 13 and a methane separator 14. The hydrogen production unit 3 comprises an evaporator 21, a heater 22, a dehydrogenation reaction unit 23 and a second gas liquid separator 24. The hydrogen and synthetic natural gas production system 1 is constructed as a chemical plant.

First of all, the synthetic natural gas production unit 2 is described in the following. In the synthetic natural gas production unit 2, the high temperature SNG reaction unit 11, the low temperature SNG reaction unit 12, the first gas liquid separator 13 and the methane separator 14 are connected to each other in that order from the upstream end of the system. The material consisting of carbon dioxide and hydrogen is well mixed, and is then fed into the high temperature SNG reaction unit 11.

The carbon dioxide used for the material may be obtained from the atmospheric air or from the exhaust gas produced by the combustion of fuel in an electric power generator or an internal combustion engine. The carbon dioxide contained in the atmospheric air may be separated from other components by using a carbon dioxide recovery device. The carbon dioxide recovery device may be based on a per se known carbon dioxide recovery technique such as chemical absorption, physical adsorption and membrane separation. A carbon dioxide recovery device based on chemical absorption uses an alkaline solution that selectively dissolves carbon dioxide. The carbon dioxide recovery device may include an absorption unit and a regeneration unit. The absorption unit and the regeneration unit consist of individual vessels that are connected to each other via piping so that the fluid may circulate between them. The alkaline solution that may be used as the absorption agent may consist of such materials as aqueous solutions of alkanolamine and potassium carbonate.

In the absorption unit, the gas containing the carbon dioxide and the absorption agent are contacted each other as counter flows so that the carbon dioxide in the gas is dissolved and absorbed in the absorption agent. The gas freed from the carbon dioxide is released from the absorption unit into the atmosphere. The absorption agent that has absorbed the carbon dioxide is forwarded to the regeneration unit to be processed. In the regeneration process, the absorption agent that has absorbed the carbon dioxide is heated, and releases the carbon dioxide. The carbon dioxide separated in this manner may be used as the material for the inventive method discussed in this application.

The hydrogen used as the material for the inventive method may be supplied from the outside, or may also be supplied from the hydrogen production unit 3.

The high temperature SNG reaction unit 11 and the low temperature SNG reaction unit 12 are configured to produce carbon monoxide and water by using the carbon dioxide and the hydrogen as the materials for a reverse shift reaction represented by Chemical Equation (1) in the presence of a catalyst. The reaction represented by Chemical Equation (1) is an endothermic reaction (ΔH₂₉₈ = 40.1 kJ/mole), and chemical equilibrium causes a rightward shift in Chemical Equation (1) (or toward the side where carbon monoxide is produced) with an increase in the temperature. Therefore, it is advantageous to perform this reaction at a high temperature. The catalyst typically consists of a nickel-based catalyst.

*CO*₂ + *H*₂ ⇄ *CO* + *H*₂*O* ▪▪▪ (1)

The high temperature SNG reaction unit 11 and the low temperature SNG reaction unit 12 are also configured to produce methane by using the hydrogen and the carbon monoxide produced by the reverse shift reaction as the materials for a methanation reaction represented by Chemical Equation (2) in the presence of a catalyst.

*CO* + 3*H*₂ ⇄ *CH*₄ + *H*₂*O* ▪▪▪ (2)

The reaction represented by Chemical Equation (2) is an exothermic reaction (ΔH₂₉₈ = - 205.6 kJ/mole). As the methanation reaction progresses rightward, there will be a fewer mole number. Therefore, chemical equilibrium causes a rightward shift in Chemical Equation (2) with a decrease in the temperature and a rise in the pressure. As this reaction is an equilibrium reaction, the product contains hydrogen and carbon dioxide as well as methane.

Thus, in the high temperature SNG reaction unit 11 and the low temperature SNG reaction unit 12, both the reverse shift step for producing carbon monoxide from the carbon dioxide and the hydrogen by a reverse shift reaction and the methanation step for producing methane from the hydrogen and at least one of the carbon monoxide and the carbon dioxide are performed by a methanation reaction. More specifically, the net reaction combining Chemical Equations (1) and (2) and canceling out the carbon monoxide is represented by Chemical Equation (3) given in the following. This reaction is an exothermic reaction (ΔH₂₉₈ = 40.1 kJ/mole + (- 205.6) kJ/mole = -164.5 kJ/mole). Therefore, a certain amount of heat is generated in the high temperature SNG reaction unit 11 and the low temperature SNG reaction unit 12. In order to convert all of the carbon dioxide into methane in Chemical Equation (3), the mole ratio of hydrogen to carbon dioxide is preferably 4 or is greater than 4.

*CO*₂ + 4*H*₂ ⇄ *CH*₄ + 2*H*₂*O* ▪▪▪ (3)

The reaction vessel of the high temperature SNG reaction unit 11 is maintained at a high temperature of 350 to 500 °C. As mentioned above, the higher the temperature is, the more active the rightward reaction of Chemical Equation (1) becomes, and the more active the leftward reaction of Chemical Equation (2) becomes. The higher the temperature, the more rapid the reactions of Chemical Equations (1) and (2) become. In the high temperature SNG reaction unit 11, a majority of the carbon dioxide is converted into carbon monoxide by the shift reaction, but the produced carbon monoxide is not entirely converted into methane by the methanation reaction, and a part of the carbon dioxide remains as it is. Therefore, the product that is forwarded from the high temperature SNG reaction unit 11 to the low temperature SNG reaction unit 12 contains carbon dioxide, hydrogen, carbon monoxide and methane.

The reaction vessel of the low temperature SNG reaction unit 12 is maintained at a low temperature of 250 to 350 °C. As mentioned above, the lower the temperature is, the less rapid the reaction speed becomes. Thus, the lower the temperature is, the more active the leftward reaction of Chemical Equation (1) becomes, and the more active the rightward reaction of Chemical Equation (2) becomes. Therefore, the product that is forwarded from the low temperature SNG reaction unit 12 to the first gas liquid separator 13 mainly consists of methane, but also contains water and an excess amount of hydrogen.

The reaction heat produced by the reaction in the high temperature SNG reaction unit 11 is supplied to the heater 22 and the dehydrogenation reaction unit 23 via the first heat exchanger 4. In other words, the first heat exchanger 4 receives the reaction heat of the high temperature SNG reaction unit 11 so that the temperature in the reaction vessel of the high temperature SNG reaction unit 11 is maintained within the prescribed temperature range.

The reaction heat produced by the reaction in the low temperature SNG reaction unit 12 is supplied to the high temperature SNG reaction unit 11 and the evaporator 21 of the hydrogen production unit 3 via the second heat exchanger 5, to be used for preheating and evaporation, respectively. In other words, the second heat exchanger 5 receives the reaction heat of the low temperature SNG reaction unit 12 so that the temperature in the reaction vessel of the low temperature SNG reaction unit 12 is maintained within the prescribed temperature range.

The first gas liquid separator 13 may consist of a per se known knock out drum. The product forwarded from the low temperature SNG reaction unit 12 to the first gas liquid separator 13 is cooled to a temperature lower than 100 °C by a cooler not shown in the drawings so that the steam therein is caused to condense into liquid water. The first gas liquid separator 13 separates the product gas containing methane and hydrogen from the water in liquid form, and the product gas is forwarded to the methane separator 14.

The methane separator 14 separates methane from the product gas. The methane separator may consist of a per se known device using pressure swing absorption (PSA) or hydrogen separation membrane, and separates hydrogen and methane from the product gas. In the illustrated embodiment, the methane separator 14 consists of a pressure swing absorption device. The methane freed from the hydrogen in the methane separator 14 is delivered from the hydrogen and synthetic natural gas production system 1 to the outside as synthetic natural gas. The hydrogen separated by the methane separator 14 is mixed with the carbon dioxide that is to be supplied to the high temperature SNG reaction unit 11 as the hydrogen material for the synthetic natural gas production unit 2.

The hydrogen production unit 3 is described in the following. In the hydrogen production unit 3, the evaporator 21, the heater 22, the dehydrogenation reaction unit 23 and the second gas liquid separator 24 are connected to each other in that order. The hydrogenated aromatic compound in liquid form is supplied to the evaporator 21 as the material, and is evaporated therein. The evaporator 21 evaporates the hydrogenated aromatic compound by using the heat supplied by the low temperature SNG reaction unit 12 via the second heat exchanger 5. The vaporized hydrogenated aromatic compound is forwarded from the evaporator 21 to the heater 22 to be heated thereby. The heater 22 is placed in a heat exchanging relationship with the high temperature SNG reaction unit 11 via the first heat exchanger 4 to heat and raise the temperature of the vaporized hydrogenated aromatic compound. Alternatively, the first heat exchanger 4 may be used for producing high temperature steam by using the heat supplied by the high temperature SNG reaction unit 11, and supplying the produced steam to the heater 22.

The vaporized and heated hydrogenated aromatic compound is forwarded from the heater 22 to the dehydrogenation reaction unit 23. The dehydrogenation reaction unit 23 produces hydrogen and aromatic compound from the hydrogenated aromatic compound by a dehydrogenation reaction in the existence of a catalyst. In the illustrated embodiment, the dehydrogenation reaction unit 23 carries out a dehydrogenation step in which hydrogen and an aromatic compound are produced from the hydrogenated aromatic compound by performing a dehydrogenation reaction, and the hydrogenated aromatic compound consists of methylcyclohexane. The dehydrogenation reaction of methylcyclohexane is represented by Chemical Equation (4) given below, and yields hydrogen and toluene. The chemical reaction represented by Chemical Equation (4) is an endothermic reaction (ΔH₂₉₈ = 205.0 kJ/mole). The dehydrogenation reaction of any other aromatic compound is also an endothermic reaction.

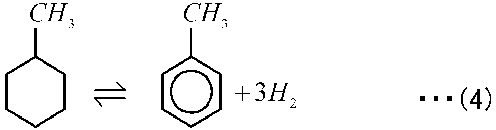

The dehydrogenation reaction unit 23 is positioned in a heat exchanging relationship with the high temperature SNG reaction unit 11 and the heater 6 via the first heat exchanger 4. The heater 6 supplies heat to the dehydrogenation reaction unit 23 via the first heat exchanger 4 in the illustrated embodiment, but may also directly supply heat to the dehydrogenation reaction unit 23 without the intervention of the first heat exchanger 4. The heater 6 may also derive combustion heat that is produced by burning the synthetic natural gas produced by the synthetic natural gas production unit 2, the hydrogen produced by the hydrogen production unit 3 or any other fuel supplied externally. The dehydrogenation reaction unit 23 may consist, not exclusively, of a shell and tube reaction unit which includes a cylindrical shell and a plurality of tubes extending within the shell. The internal space of the tubes is separated from the internal space of the shell. The interior of the tubes is filled with a dehydrogenation catalyst that promotes the dehydrogenation reaction. The hydrogenation catalyst may include a porous gamma-alumina carrier and at least a member of a group of catalysts consisting of platinum (Pt), palladium (Pd), rhodium (Rh), iridium (Ir) and ruthenium (Ru). The catalyst preferably comprises a porous gamma-alumina carrier having a surface area of 150 m²/g or greater, a pore volume of 0.40 cm³/g or greater and an average pore diameter of 90 to 300 Å with the pores having a diameter ranging within ± 30 Å of the average pore diameter accounting for at least 50% of the total volume of the pores, and at least one of platinum, palladium, rhodium, iridium and ruthenium carried by the carrier.

The evaporated hydrogenated aromatic compound is supplied to each tube in the dehydrogenation reaction unit 23, and flows therein while contacting the catalyst. The high temperature fluid from the first heat exchanger 4 is supplied to the interior of the shell to exchange heat with the tubes so that the catalyst and the hydrogenated aromatic compound are heated. The high temperature fluid that is supplied from the first heat exchanger 4 may consist of steam, for instance. By receiving heat from the first heat exchanger 4, the hydrogenated aromatic compound is converted into hydrogen and aromatic compound (which consists of toluene when the hydrogenated aromatic compound is methylcyclohexane) in the presence of the catalyst.

The second gas liquid separator 24 may consist of a per se known knock out drum. The product forwarded from the dehydrogenation reaction unit 23 to the second gas liquid separator 24 is cooled by a cooler not shown in the drawings, and the aromatic compound condenses into liquid. When the aromatic compound consists of toluene, the aromatic compound is cooled to a temperature below 111 °C which is the boiling point of toluene. In the second gas liquid separator 24, the hydrogen in gas form and the aromatic compound in liquid form are separated from each other. As a part of the hydrogen is used as the material for the synthetic natural gas production unit 2, the separated hydrogen is mixed with the carbon dioxide that is to be supplied to the high temperature SNG reaction unit 11. The remaining hydrogen is delivered from the hydrogen and synthetic natural gas production system 1 to the outside.

The aromatic compound that is separated by the second gas liquid separator 24 is transported to a facility for hydrogenating the aromatic compound via a ship or a pipeline, and is hydrogenated at the facility for hydrogenating the aromatic compound to be converted into hydrogenated aromatic compound once again. The produced hydrogenated aromatic compound is once again transported by a ship or a pipeline to the hydrogen production unit 3 of the hydrogen and synthetic natural gas production system 1. By thus circulating the aromatic compound and the hydrogenated aromatic compound, a hydrogen supply chain can be established where the hydrogen is transported as the hydrogenated aromatic compound which can be conveniently transported.

The hydrogen and synthetic natural gas production system 1 discussed above comprises the hydrogen production unit 3 for delivering hydrogen and the synthetic natural gas production unit 2 for delivering synthetic natural gas. In other words, the hydrogen and synthetic natural gas production system 1 is able to deliver both hydrogen and synthetic natural gas. The hydrogen production unit 3 receives the heat produced by the synthetic natural gas production unit 2 via the first heat exchanger 4 and the second heat exchanger 5, and uses this heat for the dehydrogenation reaction. In particular, a large part of the heat that is required for the dehydrogenation reaction in the hydrogen production unit 3 can be obtained from the heat produced by the synthetic natural gas production unit 2 so that the need for external heat can be minimized. Therefore, the energy consumption and the carbon dioxide emission of the hydrogen and synthetic natural gas production system 1 can be minimized.

Significantly, as the synthetic natural gas production unit 2 is configured to produce synthetic natural gas by using carbon dioxide as the material, the emission of carbon dioxide to the atmosphere can be minimized. Therefore, the hydrogen and synthetic natural gas production system 1 of the illustrated embodiment can not only deliver hydrogen which is a source of clean energy but also allows the emission of carbon dioxide during the process of producing the hydrogen to be reduced. Furthermore, the carbon dioxide which is obtained from the atmosphere or the carbon dioxide which is expelled from other devices can be used for producing the synthetic natural gas so that the emission of carbon dioxide can be reduced in this regard as well.

In the illustrated embodiment, because the SNG reaction unit is divided into the high temperature SNG reaction unit 11 and the low temperature SNG reaction unit 12 in the synthetic natural gas production unit 2, the heat that is required to achieve the temperature suitable for the dehydrogenation reaction can be recovered, and the reaction speed in producing the synthetic natural gas and the yield of the synthetic natural gas can be both increased. As the methanation reaction represented by Chemical Equation (2) is an equilibrium reaction and an exothermic reaction, the yield of the methane (synthetic natural gas) can be increased by lowering the temperature for the reaction. However, when the temperature for the reaction is lowered, not only the reaction speed decreases but also the heat that can be supplied to the heater 22 and the dehydrogenation reaction unit 23 via the heat exchanger 4 decreases. In particular, because the dehydrogenation reaction unit 23 operates at a high temperature, if the operation temperatures of the high temperature SNG reaction unit 11 and the low temperature SNG reaction unit 12 are low, it becomes difficult to raise the temperature of the dehydrogenation reaction unit 23 to the operating temperature in an efficient manner so that an extra measure is required to raise the temperature of the dehydrogenation reaction unit 23. Therefore, in the high temperature SNG reaction unit 11, by raising the temperature for the reaction, the reaction speed is increased, and the heat that can be recovered by the first heat exchanger 4 is increased. At the same time, in the low temperature SNG reaction unit 12, by lowering the temperature for the reaction, the chemical equilibrium can be shifted towards the product (in the direction to produce methane) so that the yield of methane can be increased. In other words, the illustrated embodiment achieves both the increase in the yield of synthetic natural gas in the synthetic natural gas production unit 2 and the increase in the efficiency of heat supply to the dehydrogenation reaction unit 23.

The first heat exchanger 4 and the second heat exchanger 5 of the first embodiment can be modified in a number of different ways. For instance, the first heat exchanger 4 may be incorporated into the high temperature SNG reaction unit 11, the heater 22 or the dehydrogenation reaction unit 23 as an integral part thereof. For instance, when the tubes for conducting the reactants and the product of the high temperature SNG reaction unit 11 are passed through the interior of the shell of the dehydrogenation reaction unit 23 or the interior of the heater 22, the tubes may serve as the first heat exchanger 4. As an alternate arrangement, the high temperature SNG reaction unit 11 and the dehydrogenation reaction unit 23 may be constructed as a single integral unit while the first heat exchanger 4 is constructed as a structural body that divides the high temperature SNG reaction unit 11 and the dehydrogenation reaction unit 23 from each other.

In the first embodiment, if the heat that can be supplied from the high temperature SNG reaction unit 11 to the dehydrogenation reaction unit 23 is more than is required for the reaction in the dehydrogenation reaction unit 23, the excess heat of the dehydrogenation reaction unit 23 may be used for the preheating of the carbon dioxide and the hydrogen that are supplied to the high temperature SNG reaction unit 11. In this case, a heat exchanger may be provided between the piping for supplying the carbon dioxide and the hydrogen to the high temperature SNG reaction unit 11 and the dehydrogenation reaction unit 23. Alternatively, a heat exchanger may be provided between the inlet end of the high temperature SNG reaction unit 11 and the dehydrogenation reaction unit 23.

Furthermore, if the heat that can be supplied from the high temperature SNG reaction unit 11 to the dehydrogenation reaction unit 23 is more than is required for the reaction in the dehydrogenation reaction unit 23, the heat supplied to the dehydrogenation reaction unit 23 may be limited such that the excess heat of the high temperature SNG reaction unit 11 may be used for the preheating of the carbon dioxide and the hydrogen that are supplied to the high temperature SNG reaction unit 11. In this case, a heat exchanger may be provided between the piping for supplying the carbon dioxide and the hydrogen to the high temperature SNG reaction unit 11 and the high temperature SNG reaction unit 11. Alternatively, a heat exchanger may be provided between the inlet end of the high temperature SNG reaction unit 11 and a high temperature part of the high temperature SNG reaction unit 11.

### (Second Embodiment)

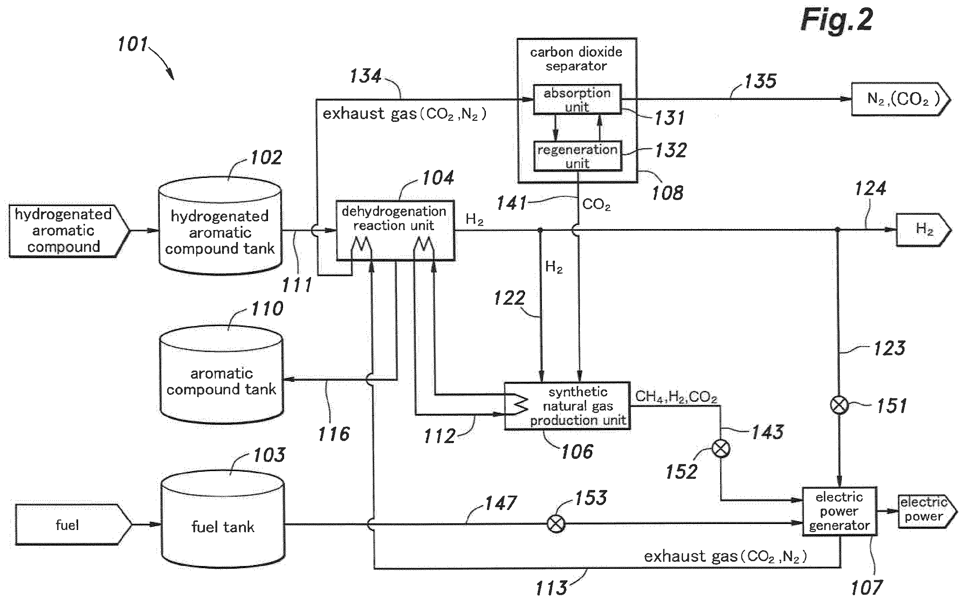

The second embodiment of the present invention as applied to an energy supply system (hydrogen and synthetic natural gas production system) is described in the following with reference to the appended drawings. Figure 2 is a block diagram of the energy supply system of the second embodiment.

The energy supply system 101 receives supplies of a hydrogenated aromatic compound (organic hydride) and fuel, and produces hydrogen and electric power. During the process of generating electric power, the energy supply system 101 also functions as a production system for hydrogen and synthetic natural gas, primarily for the purpose of producing synthetic natural gas mainly consisting of methane. More specifically, the energy supply system 101 involves the power generation step of converting the energy obtained by burning fossil fuel into electric power, the dehydrogenation step for producing hydrogen from a hydrogenated aromatic compound by a dehydrogenation reaction, and the synthetic natural gas production step (methanation step) for producing synthetic natural gas from the carbon dioxide contained in the exhaust gas released by the combustion in the power generation step and the hydrogen released by the dehydrogenation step. In particular, hydrogen and electric power are produced in the power generation step by performing an energy supply method based on the combustion of the synthetic natural gas produced in the synthetic natural gas production step in addition to the fossil fuel. As shown in Figure 2, the energy supply system 101 comprises a hydrogenated aromatic compound tank 102, a fuel tank 103, a dehydrogenation reaction unit (hydrogen production unit) 104, a synthetic natural gas production unit (methanation reaction unit) 106, an electric power generator 107, a carbon dioxide separator 108 and an aromatic compound tank 110. This energy supply system 101 is constructed as a chemical plant.

The electric power generator 107 is based on hydrogen-mixed fuel combustion, and converts the produced heat into electric power. The electric power generator 107 may consist of a steam turbine power generator that uses the heat produced by the combustion for heating water, and drives the turbine (steam turbine) by using the produced steam, or gas turbine power generator that drives the turbine for generating electric power by using the combustion gas. The fossil fuel may consist of hydrocarbons such as heavy oil and kerosene, or utility gases or natural gas (hydrocarbon gas) that may contain propane gas. In the illustrated embodiment, the electric power generator 107 consists of a hydrogen-mixed fuel gas turbine generator that uses a mixture of natural gas and hydrogen. By burning the hydrogen and the natural gas, the electric power generator 107 produces electric power and releases exhaust gas (combustion gas). The exhaust gas contains carbon dioxide, nitrogen, water and other trace components.

The hydrogenated aromatic compound tank 102 is a vessel for storing the hydrogenated aromatic compound. The hydrogenated aromatic compound tank 102 is connected to the dehydrogenation reaction unit 104 via a passage 111 so that the hydrogenated aromatic compound may be supplied to the dehydrogenation reaction unit 104. The hydrogenated aromatic compound tank 102 receives an external supply of hydrogenated aromatic compound transported by using ships, land vehicles and pipelines.

The dehydrogenation reaction unit 104 produces hydrogen and an aromatic compound from the hydrogenated aromatic compound by a dehydrogenation reaction in the presence of a catalyst. In the illustrated embodiment, the dehydrogenation reaction unit 104 performs a hydrogen production step (dehydrogenation step) for producing hydrogen and an aromatic compound from the hydrogenated aromatic compound by a dehydrogenation reaction. When the hydrogenated aromatic compound consists of methylcyclohexane, hydrogen and toluene are produced by the dehydrogenation reaction (hydrogen production reaction) by a chemical reaction represented by Chemical Equation (4) discussed above. The dehydrogenation reaction of the hydrogenated aromatic compound is an endothermic reaction.

The dehydrogenation reaction unit 104 may consist, not exclusively, of a shell and tube reaction unit which includes a cylindrical shell and a plurality of tubes extending within the shell. The internal space of the tubes is separated from the internal space of the shell. The interior of the tubes is filled with a dehydrogenation catalyst for promoting the dehydrogenation reaction as discussed earlier.

The evaporated hydrogenated aromatic compound is supplied to each tube in the dehydrogenation reaction unit 104, and flows therein while contacting the catalyst. High temperature fluid is supplied to the interior of the shell to exchange heat with the tubes so that the catalyst and the methylcyclohexane are heated. The high temperature fluid consists of the exhaust gas of the electric power generator 107. The electric power generator 107 is connected to the shell of the dehydrogenation reaction unit 104 via an exhaust passage 113 so that the exhaust gas of the electric power generator 107 is supplied into the shell of the dehydrogenation reaction unit 104 via the exhaust passage 113.

The dehydrogenation reaction unit 104 is provided with a heat exchanger 112 in a heat exchanging relationship with the tubes thereof. The heat exchanger 112 is also in a heat exchanging relationship with the synthetic natural gas production unit (methanation reaction unit) 106 so that the heat of the synthetic natural gas production unit 106 may be supplied to the dehydrogenation reaction unit 104. The heat exchanger 112 may use steam as a heat medium, and may be provided with a steam recirculation passage passing through both the synthetic natural gas production unit 106 and the dehydrogenation reaction unit 104. The steam in the heat exchanger 112 is heated by the synthetic natural gas production unit 106, and the heat of the steam is transmitted to the tubes of the dehydrogenation reaction unit 104. The hydrogenated aromatic compound receives heat from the exhaust gas flowing through the shell and the steam flowing through the heat exchanger 112, and is converted into hydrogen and aromatic compound in the presence of the catalyst.

Because the hydrogen produced by the dehydrogenation reaction unit 104 is in gas form, and the aromatic compound is liquefied by the cooling process, the hydrogen and the aromatic compound are individually expelled from the dehydrogenation reaction unit 104. The aromatic compound is transported to the aromatic compound tank 110 via a passage 116, and is stored therein. A part of the hydrogen is supplied to the electric power generator 107 via a passage 123, and the remaining hydrogen is supplied to external facilities via a hydrogen supply line 124.

The carbon dioxide separator 108 may be based on a per se known carbon dioxide recovery technique such as chemical absorption, physical adsorption and membrane separation. The carbon dioxide separator 108 of the illustrated embodiment is based on a chemical absorption technique using an alkaline solution that selectively dissolves carbon dioxide as an absorption agent. The carbon dioxide separator 108 includes an absorption unit 131 and a regeneration unit 132. The absorption unit 131 and the regeneration unit 132 consist of individual vessels that are connected to each other via piping so that the fluid may circulate between them. The alkaline solution that may be used as the absorption agent may consist of such materials as aqueous solutions of alkanolamine and potassium carbonate. In the illustrated embodiment, the absorption agent consists of a monoethanol aqueous solution that selective absorbs acid gases such as hydrogen sulfide and carbon dioxide.

In the absorption unit 131, the supplied gas and the monoethanolamine aqueous solution are contacted with each other, and the carbon dioxide in the supplied gas is dissolved in the monoethanolamine aqueous solution so that the carbon dioxide is separated from the supplied gas. The gas freed from the carbon dioxide is expelled to the outside. The monoethanolamine aqueous solution that has absorbed the carbon dioxide is forwarded to the regeneration unit 132 to be regenerated therein. The regeneration process consists of heating the monoethanolamine aqueous solution that has absorbed the carbon dioxide so that the carbon dioxide is released from the monoethanolamine aqueous solution. The heat required for the regeneration process may be supplied by the electric power generator 107 and the synthetic natural gas production unit 106. The carbon dioxide that was separated from the monoethanolamine aqueous solution in the regeneration unit 132 is expelled to the outside while the monoethanolamine aqueous solution freed from the carbon dioxide is recycled to the absorption unit 131.

The absorption unit 131 of the carbon dioxide separator 108 is connected to the shell of the dehydrogenation reaction unit 104 via a passage 134. The exhaust gas of the electric power generator 107 that has passed through the shell of the dehydrogenation reaction unit 104 is supplied to the absorption unit 131 via the passage 134. The carbon dioxide that is contained in the exhaust gas that has been supplied to the absorption unit 131 is dissolved in the monoethanolamine aqueous solution therein. The exhaust gas freed from the carbon dioxide essentially consists of nitrogen, and is expelled from the absorption unit 131 to a passage 135. The passage 135 is connected to a per se known device for carrying out a purification step, and is eventually released to the atmosphere. The monoethanolamine aqueous solution that has absorbed the carbon dioxide in the absorption unit 131 is forwarded to the regeneration unit 132 to be regenerated therein so that the monoethanolamine aqueous solution that has absorbed the carbon dioxide is separated into carbon dioxide in gas form and monoethanolamine aqueous solution in liquid form. The carbon dioxide separated from the monoethanolamine aqueous solution is compressed by a compressor before being supplied to the synthetic natural gas production unit 106 via a passage 141 while the monoethanolamine aqueous solution freed from the carbon dioxide is recycled to the absorption unit 131.

The synthetic natural gas production unit 106 performs a reverse shift reaction by using the hydrogen supplied from the dehydrogenation reaction unit 104 via a passage 122 and the carbon dioxide supplied from the regeneration unit 132 of the carbon dioxide separator 108 via the passage 141, and produces carbon monoxide and water. This reaction takes place in the presence of the catalyst, and is represented by Chemical Equation (1) discussed earlier. As this reaction moves toward the side of producing carbon monoxide (moves to the right hand side of the equation) with an increase in temperature, it is advantageous to perform this reaction at a high temperature.

Additionally, the synthetic natural gas production unit 106 produces synthetic natural gas (methane) by a methanation reaction in the presence of the catalyst by using the supplied hydrogen and the carbon monoxide produced by the reverse shift reaction as the materials. The methanation reaction can be represented by Chemical Equation (2) discussed earlier.

The overall Chemical Equation (3) combining Chemical Equations (1) and (2) is an equilibrium equation which produces heat and causes a reduction in the total mole number as the reaction progresses from the left hand side to the right hand side of Chemical Equation (3). Therefore, the equilibrium shifts toward the right hand side of the equation as the temperature becomes lower and the pressure rises higher. Because this reaction is an equilibrium equation, the product includes hydrogen and carbon dioxide as well as the synthetic natural gas. Thus, the synthetic natural gas production unit 106 performs both the reverse shift step for producing carbon monoxide from carbon dioxide and hydrogen by the reverse shift reaction and the synthetic natural gas production step for producing synthetic natural gas from at least one of carbon dioxide and carbon monoxide and hydrogen by the methanation reaction.

The gas that is delivered by the synthetic natural gas production unit 106 includes unreacted hydrogen and carbon dioxide in addition to the synthetic natural gas, and is forwarded to the electric power generator 107 via a passage 143. When the carbon dioxide is desired to be removed from the gas that is supplied from the synthetic natural gas production unit 106 to the electric power generator 107, a carbon dioxide separator may be provided in the passage 143. This carbon dioxide separator may be similar to the carbon dioxide separator 108 mentioned above. The water produced by the reverse shift reaction and the methanation reaction in the synthetic natural gas production unit 106 is separated from the synthetic natural gas, the hydrogen and the carbon dioxide, and is expelled from the synthetic natural gas production unit 106.

The electric power generator 107 receives a supply of hydrogen from the dehydrogenation reaction unit 104 via the passage 123, receives supplies of synthetic natural gas, hydrogen and carbon dioxide from the synthetic natural gas production unit 106 via the passage 143, and receives a supply of fuel from the fuel tank 103 via a fuel passage 147. The passage 123, the passage 143 and the fuel passage 147 are provided with flow rate control valves 151, 152 and 153, respectively, so that the ratios of the flow rates of the gasses that are supplied to the electric power generator 107 via the passage 123, the passage 143 and the fuel passage 147 can be adjusted individually by changing the opening degrees of the flow rate control valves 151, 152 and 153. More specifically, by changing the opening degrees of the flow rate control valves 151, 152 and 153, the ratios of the hydrogen, the synthetic natural gas and the natural gas (fuel) that are supplied to the electric power generator 107 can be adjusted. The electric power generator 107 burns the hydrogen, the synthetic natural gas and the natural gas (fuel), and converts the produced heat into electric power that is to be supplied to the outside. In other words, the electric power generator 107 performs an electric power generation step for converting the energy obtained by burning the hydrogen, the synthetic natural gas and the natural gas (fossil fuel) into electric power. At the same time, the electric power generator 107 releases exhaust gas containing carbon dioxide and nitrogen as a result of the combustion of the hydrogen, the synthetic natural gas and the natural gas (fuel).

The exhaust gas released from the electric power generator 107 is forwarded to the shell of the dehydrogenation reaction unit 104, and used as a heat source for heating the tubes. Thereafter, the exhaust gas is forwarded to the carbon dioxide separator 108, and after being freed from the carbon dioxide and subjected to a purification step, is released to the atmosphere.

The heat exchanger 112 provided in the synthetic natural gas production unit 106 and the dehydrogenation reaction unit 104 receives heat from the synthetic natural gas production unit 106, and supplies the heat to the dehydrogenation reaction unit 104. The heat exchanger 112 heats steam by making use of the heat produced by the methanation reaction in the synthetic natural gas production unit 106, transports the heated steam to the dehydrogenation reaction unit 104, and heats the hydrogenated aromatic compound and the catalyst in the tubes with the heated steam.

The heat required for the dehydrogenation reaction in the dehydrogenation reaction unit 104 is obtained from the heat produced by the methanation reaction in the synthetic natural gas production unit 106 and the heat of the exhaust gas released from the electric power generator 107.

The heat produced by the methanation reaction in the synthetic natural gas production unit 106 may also be supplied to the regeneration unit 132 of the carbon dioxide separator 108 for the regeneration of the monoethanolamine.

The energy supply system 101 discussed above includes a hydrogen production facility for supplying hydrogen to the outside and the electric power generator 107 for supplying the electric power to the outside. In other words, the energy supply system 101 may be considered either as a hydrogen station equipped with an electric power generator or a power plant equipped with a hydrogen production facility. Also, by converting the carbon dioxide contained in the exhaust gas released from the electric power generator 107 into synthetic natural gas by using a part of the hydrogen produced by the hydrogen production facility, the amount of the carbon dioxide that is released from the energy supply system can be minimized. Furthermore, because the synthetic natural gas produced from the carbon dioxide and the hydrogen by the methanation reaction is supplied to the electric power generator 107, the consumption of the fuel that is supplied via the fuel supply line can be minimized.

Because the dehydrogenation reaction in the dehydrogenation reaction unit 104 and the regeneration process for the monoethanolamine in the regeneration unit 132 of the carbon dioxide separator 108 are performed by using the heat obtained from the methanation reaction in the synthetic natural gas production unit 106 and the exhaust gas of the electric power generator, respectively, the need for additional heat for the dehydrogenation reaction and the regeneration process can be minimized. In other words, the need for extra energy can be minimized, and the emission of carbon dioxide is minimized in a corresponding manner.

The energy supply system 101 of the illustrated embodiment allows the amounts of hydrogen and electric power that are delivered can be adjusted according to demands for electric power and hydrogen and the available supplies of hydrogenated aromatic compound and fuel (the amounts stored in the hydrogenated aromatic compound tank 102 and the fuel tank 103). For instance, if there are adequate supplies of hydrogenated aromatic compound and fossil fuel, and the demand for hydrogen is comparatively greater than the demand for electric power, a higher priority may be given to the production of hydrogen by reducing the amount of hydrogen that is used for the methanation reaction. If there is a shortage of hydrogen that is used for the methanation reaction, the methanation reaction may be suspended, and the electric power generation may be carried out by using only the fuel that is supplied from the fuel tank 103 to the electric power generator 107 via the fuel passage 147. Once the methanation reaction is suspended, as there is no need to supply carbon dioxide to the synthetic natural gas production unit 106, the carbon dioxide separator 108 may be shut down. In this case, the exhaust gas from the electric power generator 107 is expelled to the outside via the absorption unit 131 of the carbon dioxide separator 108 and the passage 135.

Alternatively, a storage tank may be provided in the path of the passage 141. In this case, when the supply of carbon dioxide to the synthetic natural gas production unit 106 is not needed, the carbon dioxide that is separated by the carbon dioxide separator 108 may be stored in a storage tank so that the emission of the carbon dioxide gas to the atmosphere may be avoided. Alternatively, the unneeded carbon dioxide may be injected into the ground or into the seabed to be sequestrated therein.

In the energy supply system 101, if the supply of hydrogenated aromatic compound is adequate, but the fossil fuel is in short supply or the fuel cost is high, the use of fossil fuel can be minimized by increasing the production of the synthetic natural gas by the methanation reaction, and burning the produced synthetic natural gas, in place of the fossil fuel.

If the emission of carbon dioxide gas from the energy supply system is desired to be reduced, the production of synthetic natural gas by the methanation reaction may be increased so that the emission of carbon dioxide to the atmosphere may be minimized.

Thus, the energy supply system of the illustrated embodiment is able to change the operating condition thereof depending on the demands for electric power and hydrogen, the available amounts (stored amounts) of hydrogenated aromatic compound and fossil fuel, and the requirements on the emission of carbon dioxide.

### (Third Embodiment)

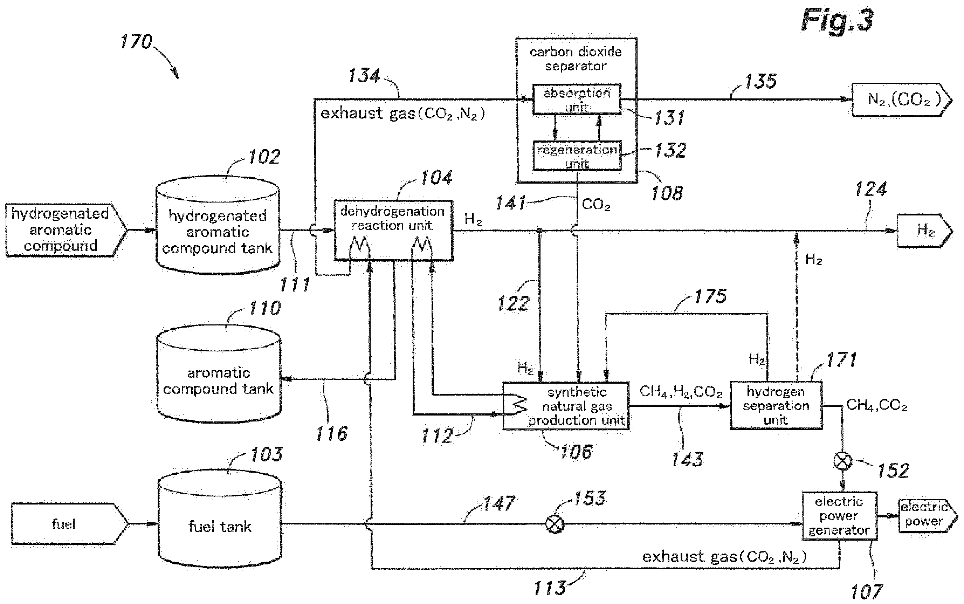

The third embodiment of the present invention as applied to an energy supply system (hydrogen and synthetic natural gas production system) 170 is described in the following with reference to the appended drawings. Figure 3 is a block diagram of the energy supply system 170 of the third embodiment. The energy supply system 170 of the third embodiment differs from the energy supply system 101 of the second embodiment in that a hydrogen separator 171 is provided between the synthetic natural gas production unit 106 and the electric power generator 173, the passage 123 is omitted, and the configuration of the electric power generator 173 is different. In the description of the energy supply system 170 of the third embodiment, the parts corresponding to those of the energy supply system 101 of the second embodiment are denoted with like numerals without necessarily repeating the description of such parts.

In the energy supply system 170 of the third embodiment, the gas that is supplied by the synthetic natural gas production unit 106 is forwarded to the hydrogen separator 171 before being forwarded to the electric power generator 173. The hydrogen separator 171 may consist of a per se known device using pressure swing absorption or hydrogen separation membrane, and separates hydrogen from synthetic natural gas and carbon monoxide. The hydrogen separator 171 is provided in the path of the passage 143. The hydrogen separated by the hydrogen separator 171 is forwarded to the synthetic natural gas production unit 106 via a passage 175. Alternatively, the hydrogen separated by the hydrogen separator 171 is forwarded to the hydrogen supply line 124. The synthetic natural gas separated from the hydrogen by the hydrogen separator 171 is forwarded to the electric power generator 173.

The electric power generator 173 may be configured to burn fossil fuel only. In the energy supply system 170 of the third embodiment, the hydrogen separator 171 is employed to remove hydrogen from the synthetic natural gas that is to be supplied to the electric power generator 173. Therefore, the electric power generator 173 is not required to be capable of burning hydrogen, but may consist of a more conventional electric power generator for burning fossil fuel. Preferably, the electric power generator 173 of the energy supply system 170 consists of an electric power generator 173 cable of burning natural gas only which is widely in use and convenient to use.

The carbon dioxide separator 108 used in the energy supply systems 101 and 107 are optional, and may be omitted as desired so that the exhaust gas that has passed through the dehydrogenation reaction unit 104 may be directly supplied to the synthetic natural gas production unit 106. The energy supply systems 101 and 107 may be implemented not only as chemical plants but also as more compact devices that can be mounted on vehicles or the like. In the energy supply systems 101 and 107, a hydrogen storage tank may be provided in the path of the hydrogen supply line 124. The electric power generator 173 may also be powered by an internal combustion engine such as a reciprocating engine.

### GLOSSARY OF TERMS

- 1: hydrogen and synthetic natural gas production system
- 2: synthetic natural gas production unit
- 3: hydrogen production unit
- 4: first heat exchanger
- 5: second heat exchanger
- 6: heater
- 11: high temperature SNG reaction unit (high temperature synthetic natural gas production unit)
- 12: low temperature SNG reaction unit (low temperature synthetic natural gas production unit)
- 13: first gas liquid separator
- 14: methane separator
- 21: evaporator
- 22: heater
- 23: dehydrogenation reaction unit
- 24: second gas liquid separator
- 101, 170: energy supply system
- 102: hydrogenated aromatic compound tank
- 103: fuel tank
- 104: dehydrogenation reaction unit (hydrogen production unit)
- 106: synthetic natural gas production unit
- 107, 173: electric power generator
- 108: carbon dioxide separator
- 110: aromatic compound tank
- 112: heat exchanger
- 124: hydrogen supply line
- 131: absorption unit
- 132: regeneration unit
- 171: hydrogen separation unit

## Claims

1. A system (1) for production of hydrogen and synthetic natural gas, comprising:
a synthetic natural gas production unit (2) for producing synthetic natural gas from hydrogen and carbon dioxide by a reverse shift reaction and a methanation reaction; and
a hydrogen production unit (3) for producing hydrogen from a hydrogenated aromatic compound by a dehydrogenation reaction;
wherein heat is supplied from the synthetic natural gas production unit to the hydrogen production unit so that a reaction heat of the methanation reaction which is an exothermic reaction is used for the dehydrogenation reaction which is an endothermic reaction;
**characterized in that** the synthetic natural gas production unit includes a high temperature synthetic natural gas production unit (11) for performing the reverse shift reaction and the methanation reaction at a high temperature and a low temperature synthetic natural gas production unit (12) for performing the reverse shift reaction and the methanation reaction at a low temperature lower than the high temperature, the low temperature synthetic natural gas production unit being connected downstream in series with the high temperature synthetic natural gas production unit;
wherein the high temperature synthetic natural gas production unit performs the reactions at the high temperature of 350 °C to 500 °C, and the low temperature synthetic natural gas production unit performs the reactions at the low temperature of 250 °C to 350 °C;
wherein the hydrogen production unit includes: an evaporator (21) for evaporating the hydrogenated aromatic compound using heat supplied by the low temperature synthetic natural gas production unit; a dehydrogenation reaction unit (23) placed on a downstream side of the evaporator in a heat exchanging relationship with the high temperature synthetic natural gas production unit and producing hydrogen, by a dehydrogenation reaction, from the hydrogenated aromatic compound evaporated by the evaporator; and a heater (22) placed between the evaporator and the dehydrogenation reaction unit in a heat exchanging relationship with the high temperature synthetic natural gas production unit and heating the hydrogenated aromatic compound evaporated by the evaporator; and
wherein the system further comprises: a first heat exchanger (4) for supplying reaction heat produced by a reaction in the high temperature synthetic natural gas production unit to the dehydrogenation reaction unit and the heater; and a second heat exchanger (5) for supplying reaction heat produced by a reaction in the low temperature synthetic natural gas production unit to the high temperature synthetic natural gas production unit and the evaporator.

2. The system for production of hydrogen and synthetic natural gas according to claim 1, further comprising an electric power generator (107) for converting energy produced by combustion of fossil fuel into electric power;
wherein the synthetic natural gas production unit produces synthetic natural gas by the reverse shift reaction and the methanation reaction of carbon dioxide contained in exhaust gas released by combustion in the electric power generator and hydrogen produced by the hydrogen production unit; and
the power generator is configured to burn the synthetic natural gas produced by the synthetic natural gas production unit along with the fossil fuel.

3. The system for production of hydrogen and synthetic natural gas according to claim 2, wherein the electric power generator is configured to burn a mixture of the hydrogen produced by the hydrogen production unit and the fossil fuel.

4. The system for production of hydrogen and synthetic natural gas according to claim 2 or 3, wherein the synthetic natural gas production unit is configured to produce carbon monoxide from the carbon dioxide contained in the exhaust gas and the hydrogen produced by the hydrogen production unit by the reverse shift reaction, and to produce synthetic natural gas from at least one of the carbon dioxide contained in the exhaust gas and the carbon monoxide produced by the reverse shift reaction, and the hydrogen produced by the hydrogen production unit by the methanation reaction.

5. The system for production of hydrogen and synthetic natural gas according to any one of claims 2 to 4, further comprising a carbon dioxide separation unit (108) for separating carbon dioxide from the exhaust gas and recovering the separated carbon dioxide;
wherein the carbon dioxide separated from the exhaust gas and recovered by the carbon dioxide separation unit is supplied to the synthetic natural gas production unit.

6. The system for production of hydrogen and synthetic natural gas according to any one of claims 2 to 5, wherein the fossil fuel comprises natural gas.

7. The system for production of hydrogen and synthetic natural gas according to claim 1, further comprising a heater (6) for supplying heat to the first heat exchanger.

8. A method for production of hydrogen and synthetic natural gas, comprising:
an synthetic natural gas production step for producing synthetic natural gas from hydrogen and carbon dioxide by a reverse shift reaction and a methanation reaction; and
a hydrogen production step for producing hydrogen from a hydrogenated aromatic compound by a dehydrogenation reaction;
wherein, in the synthetic natural gas production step, reaction heat produced by the methanation reaction which is an exothermic reaction is supplied to the hydrogen production step to be used for the dehydrogenation reaction which is an endothermic reaction;
**characterized in that** the synthetic natural gas production step includes a high temperature synthetic natural gas production step for performing the reverse shift reaction and the methanation reaction at a high temperature and a low temperature synthetic natural gas production step for performing the reverse shift reaction and the methanation reaction at a low temperature lower than the high temperature, the low temperature synthetic natural gas production unit being performed downstream in series from the high temperature synthetic natural gas production unit;
wherein in the high temperature synthetic natural gas production step, the reactions are performed at the high temperature of 350 °C to 500 °C, and in the low temperature synthetic natural gas production step, the reactions are performed at the low temperature of 250 °C to 350 °C; and
wherein the hydrogen production step includes: an evaporating step for evaporating the hydrogenated aromatic compound using heat supplied by the low temperature synthetic natural gas production step, the low temperature synthetic natural gas production step delivering heat to the high temperature synthetic natural gas production step and the evaporating step; a dehydrogenation reaction step for producing hydrogen, by a dehydrogenation reaction using heat supplied by the high temperature synthetic natural gas production step, from the hydrogenated aromatic compound evaporated by the evaporating step; and a heating step for heating, using heat supplied by the high temperature synthetic natural gas production step, the hydrogenated aromatic compound evaporated by the evaporator, the heating step being performed between the evaporating step and the dehydrogenation reaction step.

9. The method for production of hydrogen and synthetic natural gas according to claim 8, further comprising an electric power generation step for converting energy obtained by combustion of fossil fuel into electric power;
wherein the synthetic natural gas production step is adapted to produce synthetic natural gas by the reverse shift reaction and the methanation reaction of carbon dioxide contained in exhaust gas produced by combustion in the electric power generation step and hydrogen produced by the hydrogen production step; and
the electric power generation step is adapted to burn the synthetic natural gas produced by the synthetic natural gas production step along with the fossil fuel.

## Patentansprüche

1. System (1) zur Herstellung von Wasserstoff und synthetischem Erdgas, umfassend:
eine Herstellungseinheit für synthetisches Erdgas (2) zur Herstellung von synthetischem Erdgas aus Wasserstoff und Kohlendioxid durch eine umgekehrte Shift-Reaktion und eine Methanisierungsreaktion; und
eine Wasserstoffherstellungseinheit (3) zur Herstellung von Wasserstoff aus einer hydrierten aromatischen Verbindung durch eine Dehydrierungsreaktion;
wobei Wärme von der Herstellungseinheit für synthetisches Erdgas an die Wasserstoffherstellungseinheit zugeführt wird, so dass eine Reaktionswärme der Methanisierungsreaktion, die eine exotherme Reaktion ist, für die Dehydrierungsreaktion verwendet wird, die eine endotherme Reaktion ist;
**dadurch gekennzeichnet, dass** die Herstellungseinheit für synthetisches Erdgas eine Hochtemperatur-Herstellungseinheit für synthetisches Erdgas (11) zum Durchführen der umgekehrten Shift-Reaktion und der Methanisierungsreaktion bei einer hohen Temperatur und eine Niedrigtemperatur-Herstellungseinheit für synthetisches Erdgas (12) zum Durchführen der umgekehrten Shift-Reaktion und der Methanisierungsreaktion bei einer niedrigen Temperatur unterhalb der Hochtemperatur beinhaltet, wobei die Niedrigtemperatur-Herstellungseinheit für synthetisches Erdgas stromabwärts in Reihe mit der Hochtemperatur-Herstellungseinheit für synthetisches Erdgas geschaltet ist;
wobei die Hochtemperatur-Herstellungseinheit für synthetisches Erdgas die Reaktionen bei der Hochtemperatur von 350 °C bis 500 °C durchführt und die Niedrigtemperatur-Herstellungseinheit für synthetisches Erdgas die Reaktionen bei der Niedrigtemperatur von 250 °C bis 350 °C durchführt;
wobei die Wasserstoffherstellungseinheit Folgendes beinhaltet: einen Verdampfer (21) zum Verdampfen der hydrierten aromatischen Verbindung unter Verwendung von Wärme, die von der Niedrigtemperatur-Herstellungseinheit für synthetisches Erdgas zugeführt wird; eine Dehydrierungsreaktionseinheit (23), die auf einer stromabwärts gelegenen Seite des Verdampfers in einer Wärmeaustauschbeziehung mit der Hochtemperatur-Herstellungseinheit für synthetisches Erdgas platziert ist und Wasserstoff durch eine Dehydrierungsreaktion aus der hydrierten aromatischen Verbindung, die durch den Verdampfer verdampft wird, herstellt; und ein Heizelement (22), das zwischen dem Verdampfer und der Dehydrierungsreaktionseinheit in einer Wärmeaustauschbeziehung mit der Hochtemperatur-Herstellungseinheit für synthetisches Erdgas platziert ist und die vom Verdampfer verdampfte hydrierte aromatische Verbindung erwärmt; und
wobei das System weiter umfasst: einen ersten Wärmetauscher (4) zum Zuführen von Reaktionswärme, die durch eine Reaktion in der Hochtemperatur-Herstellungseinheit für synthetisches Erdgas hergestellt wird, zu der Dehydrierungsreaktionseinheit und dem Heizelement; und einen zweiten Wärmetauscher (5) zum Zuführen von Reaktionswärme, die durch eine Reaktion in der Niedrigtemperatur-Herstellungseinheit für synthetisches Erdgas hergestellt wird, an die Hochtemperatur-Herstellungseinheit für synthetisches Erdgas und den Verdampfer.

2. System zur Herstellung von Wasserstoff und synthetischem Erdgas nach Anspruch 1, weiter umfassend einen Stromerzeuger (107) zur Umwandlung von Energie, die durch Verbrennung fossiler Brennstoffe hergestellt wird, in elektrische Energie;
wobei die Herstellungseinheit für synthetisches Erdgas synthetisches Erdgas durch die umgekehrte Shift-Reaktion und die Methanisierungsreaktion von Kohlendioxid, das in Abgasen enthalten ist, die durch Verbrennung im Stromerzeuger freigesetzt werden, und Wasserstoff, der durch die Wasserstoffherstellungseinheit hergestellt wird, herstellt; und
wobei der Stromerzeuger konfiguriert ist, um das von der Herstellungseinheit für synthetisches Erdgas hergestellte synthetische Erdgas zusammen mit dem fossilen Brennstoff zu verbrennen.

3. System zur Herstellung von Wasserstoff und synthetischem Erdgas nach Anspruch 2, wobei der Stromerzeuger konfiguriert ist, um eine Mischung aus dem von der Wasserstoffherstellungseinheit hergestellten Wasserstoff und dem fossilen Brennstoff zu verbrennen.

4. System zur Herstellung von Wasserstoff und synthetischem Erdgas nach Anspruch 2 oder 3, wobei die Herstellungseinheit für synthetisches Erdgas konfiguriert ist, um Kohlenmonoxid aus dem im Abgas enthaltenen Kohlendioxid und dem von der Wasserstoffherstellungseinheit durch die umgekehrte Shift-Reaktion hergestellten Wasserstoff herzustellen und synthetisches Erdgas aus mindestens einem von dem im Abgas enthaltenen Kohlendioxid und dem durch die umgekehrte Shift-Reaktion hergestellten Kohlenmonoxid, und dem von der Wasserstoffherstellungseinheit durch die Methanisierungsreaktion hergestellten Wasserstoff herzustellen.

5. System zur Herstellung von Wasserstoff und synthetischem Erdgas nach einem der Ansprüche 2 bis 4, weiter umfassend eine Kohlendioxid-Abscheideeinheit (108) zum Abscheiden von Kohlendioxid aus dem Abgas und zum Rückgewinnen des abgeschiedenen Kohlendioxids;
wobei das vom Abgas abgeschiedene und von der Kohlendioxid-Abscheideeinheit zurückgewonnene Kohlendioxid an die Herstellungseinheit für synthetisches Erdgas zugeführt wird.

6. System zur Herstellung von Wasserstoff und synthetischem Erdgas nach einem der Ansprüche 2 bis 5, wobei der fossile Brennstoff Erdgas umfasst.

7. System zur Herstellung von Wasserstoff und synthetischem Erdgas nach Anspruch 1, weiter umfassend ein Heizelement (6) zum Zuführen von Wärme an den ersten Wärmetauscher.

8. Verfahren zur Herstellung von Wasserstoff und synthetischem Erdgas, umfassend:
eine Herstellungseinheit für synthetisches Erdgas zur Herstellung von synthetischem Erdgas aus Wasserstoff und Kohlendioxid durch eine umgekehrte Shift-Reaktion und eine Methanisierungsreaktion; und
eine Wasserstoffherstellungseinheit zur Herstellung von Wasserstoff aus einer hydrierten aromatischen Verbindung durch eine Dehydrierungsreaktion;
wobei in dem Schritt zur Herstellung von synthetischem Erdgas Reaktionswärme, die durch die Methanisierungsreaktion hergestellt wird, die eine exotherme Reaktion ist, dem Wasserstoffherstellungsschritt zur Verwendung für die Dehydrierungsreaktion, die eine endotherme Reaktion ist, zugeführt wird; ;
**dadurch gekennzeichnet, dass** der Herstellungsschritt für synthetisches Erdgas einen Hochtemperatur-Herstellungsschritt für synthetisches Erdgas zum Durchführen der umgekehrten Shift-Reaktion und der Methanisierungsreaktion bei einer hohen Temperatur und einen Niedrigtemperatur-Herstellungsschritt für synthetisches Erdgas zum Durchführen der umgekehrten Shift-Reaktion und der Methanisierungsreaktion bei einer niedrigen Temperatur unterhalb der Hochtemperatur beinhaltet, wobei die Niedrigtemperatur-Herstellungseinheit für synthetisches Erdgas stromabwärts in Reihe mit der Hochtemperatur-Herstellungseinheit für synthetisches Erdgas durchgeführt wird;
wobei in dem Hochtemperatur-Herstellungsschritt für synthetisches Erdgas die Reaktionen bei der Hochtemperatur von 350 °C bis 500 °C durchgeführt werden, und in dem Niedrigtemperatur-Herstellungsschritt für synthetisches Erdgas die Reaktionen bei der Niedrigtemperatur von 250 °C bis 350 °C durchgeführt werden; und
wobei der Wasserstoffherstellungsschritt Folgendes beinhaltet: einen Verdampfungsschritt zum Verdampfen der hydrierten aromatischen Verbindung unter Verwendung von Wärme, die durch den Niedertemperatur-Herstellungsschritt für synthetisches Erdgas zugeführt wird, wobei der Niedertemperatur-Herstellungsschritt für synthetisches Gas dem Hochtemperatur-Herstellungsschritt für synthetisches Gas und dem Verdampfungsschritt Wärme liefert; einen Dehydrierungsreaktionsschritt zur Herstellung von Wasserstoff durch eine Dehydrierungsreaktion unter Verwendung von Wärme, die durch den Hochtemperatur-Herstellungsschritt für synthetisches Erdgas zugeführt wird, aus der hydrierten aromatischen Verbindung, die durch den Verdampfungsschritt verdampft wird; und einen Erwärmungsschritt zum Erwärmen, unter Verwendung von Wärme, die durch den Hochtemperatur-Herstellungsschritt für synthetisches Erdgas zugeführt wird, der hydrierten aromatischen Verbindung, die durch den Verdampfer verdampft wird, wobei der Erwärmungsschritt zwischen dem Verdampfungsschritt und dem Dehydrierungsreaktionsschritt durchgeführt wird.

9. Verfahren zur Herstellung von Wasserstoff und synthetischem Erdgas nach Anspruch 8, weiter umfassend einen Stromerzeuger zur Umwandlung von Energie, die durch Verbrennung fossiler Brennstoffe erhalten wird, in elektrische Energie;
wobei der Schritt zur Herstellung von synthetischem Erdgas angepasst ist, um synthetisches Erdgas durch die umgekehrte Shift-Reaktion und die Methanisierungsreaktion von Kohlendioxid, das in Abgasen enthalten ist, die durch Verbrennung im Schritt zur Stromerzeugung hergestellt werden, und Wasserstoff, der durch den Schritt zur Wasserstoffherstellung hergestellt wird, herzustellen; und
wobei der Stromerzeugungsschritt konfiguriert ist, um das von der Herstellungseinheit für synthetisches Erdgas hergestellte synthetische Erdgas zusammen mit dem fossilen Brennstoff zu verbrennen.

## Revendications

1. Système (1) de production d'hydrogène et de gaz naturel synthétique, comprenant :
une unité de production de gaz naturel synthétique (2) pour produire du gaz naturel synthétique à partir d'hydrogène et de dioxyde de carbone par une réaction de conversion inverse et une réaction de méthanisation ; et
une unité de production d'hydrogène (3) pour produire de l'hydrogène à partir d'un composé aromatique hydrogéné par une réaction de déshydrogénation ;
dans lequel de la chaleur est fournie depuis l'unité de production de gaz naturel synthétique vers l'unité de production d'hydrogène de sorte qu'une chaleur de réaction de la réaction de méthanisation qui est une réaction exothermique est utilisée pour la réaction de déshydrogénation qui est une réaction endothermique ;
**caractérisé en ce que** l'unité de production de gaz naturel synthétique inclut une unité de production de gaz naturel synthétique à température élevée (11) pour exécuter la réaction de conversion inverse et la réaction de méthanisation à une température élevée et une unité de production de gaz naturel synthétique à faible température (12) pour exécuter la réaction de conversion inverse et la réaction de méthanisation à une faible température inférieure à la température élevée, l'unité de production de gaz naturel synthétique à faible température étant raccordée en aval en série à l'unité de production de gaz naturel synthétique à température élevée ;
dans lequel l'unité de production de gaz naturel synthétique à température élevée exécute les réactions à la température élevée de 350 °C à 500 °C, et l'unité de production de gaz naturel synthétique à faible température exécute les réactions à la faible température de 250 °C à 350 °C ;
dans lequel l'unité de production d'hydrogène inclut: un évaporateur (21) pour faire évaporer le composé aromatique hydrogéné en utilisant de la chaleur fournie par l'unité de production de gaz naturel synthétique à faible température ; une unité de réaction de déshydrogénation (23) placée sur un côté en aval de l'évaporateur dans une relation d'échange de chaleur avec l'unité de production de gaz naturel synthétique à température élevée et produisant de l'hydrogène, par une réaction de déshydrogénation, à partir du composé aromatique hydrogéné évaporé par l'évaporateur; et un chauffage (22) placé entre l'évaporateur et l'unité de réaction de déshydrogénation dans une relation d'échange de chaleur avec l'unité de production de gaz naturel synthétique à température élevée et chauffant le composé aromatique hydrogéné évaporé par l'évaporateur ; et
dans lequel le système comprend en outre : un premier échangeur de chaleur (4) pour fournir de la chaleur de réaction produite par une réaction dans l'unité de production de gaz naturel synthétique à température élevée à l'unité de réaction de déshydrogénation et au chauffage ; et un deuxième échangeur de chaleur (5) pour fournir de la chaleur de réaction produite par une réaction dans l'unité de production de gaz naturel synthétique à faible température à l'unité de production de gaz naturel synthétique à température élevée et à l'évaporateur.

2. Système de production d'hydrogène et de gaz naturel synthétique selon la revendication 1, comprenant en outre un générateur d'alimentation électrique (107) pour convertir de l'énergie produite par la combustion de combustible fossile en alimentation électrique ;
dans lequel l'unité de production de gaz naturel synthétique produit du gaz naturel synthétique par la réaction de conversion inverse et la réaction de méthanisation de dioxyde de carbone contenu dans le gaz d'échappement libéré par combustion dans le générateur d'alimentation électrique et d'hydrogène produit par l'unité de production d'hydrogène ; et
le générateur d'alimentation est configuré pour brûler le gaz naturel synthétique produit par l'unité de production de gaz naturel synthétique en même temps que le combustible fossile.

3. Système de production d'hydrogène et de gaz naturel synthétique selon la revendication 2, dans lequel le générateur d'alimentation électrique est configuré pour brûler un mélange de l'hydrogène produit par l'unité de production d'hydrogène et du combustible fossile.

4. Système de production d'hydrogène et de gaz naturel synthétique selon la revendication 2 ou 3, dans lequel l'unité de production de gaz naturel synthétique est configurée pour produire du monoxyde de carbone à partir du dioxyde de carbone contenu dans le gaz d'échappement et de l'hydrogène produit par l'unité de production d'hydrogène par la réaction de conversion inversion, et pour produire du gaz naturel synthétique à partir d'au moins un parmi le dioxyde de carbone contenu dans le gaz d'échappement et le monoxyde de carbone produit par la réaction de conversion inverse, et de l'hydrogène produit par l'unité de production d'hydrogène par la réaction de méthanisation.

5. Système de production d'hydrogène et de gaz naturel synthétique selon l'une quelconque des revendications 2 à 4, comprenant en outre une unité de séparation de dioxyde de carbone (108) pour séparer le dioxyde de carbone du gaz d'échappement et récupérer le dioxyde de carbone séparé ;
dans lequel le dioxyde de carbone séparé du gaz d'échappement et récupéré par l'unité de séparation de dioxyde de carbone est fourni à l'unité de production de gaz naturel synthétique.

6. Système de production d'hydrogène et de gaz naturel synthétique selon l'une quelconque des revendications 2 à 5, dans lequel le combustible fossile comprend du gaz naturel.

7. Système de production d'hydrogène et de gaz naturel synthétique selon la revendication 1, comprenant en outre un chauffage (6) pour fournir de la chaleur au premier échangeur de chaleur.

8. Procédé de production d'hydrogène et de gaz naturel synthétique, comprenant :
une étape de production de gaz naturel synthétique pour produire du gaz naturel synthétique à partir d'hydrogène et de dioxyde de carbone par une réaction de conversion inverse et une réaction de méthanisation ; et
une étape de production d'hydrogène pour produire de l'hydrogène à partir d'un composé aromatique hydrogéné par une réaction de déshydrogénation ;
dans lequel, dans l'étape de production de gaz naturel synthétique, la chaleur de réaction produite par la réaction de méthanisation qui est une réaction exothermique est fournie à l'étape de production d'hydrogène devant être utilisée pour la réaction de déshydrogénation qui est une réaction endothermique ;
**caractérisé en ce que** l'étape de production de gaz naturel synthétique inclut une étape de production de gaz naturel synthétique à température élevée pour exécuter la réaction de conversion inverse et la réaction de méthanisation à une température élevée et une étape de production de gaz naturel synthétique à faible température pour exécuter la réaction de conversion inverse et la réaction de méthanisation à une faible température inférieure à la température élevée, l'unité de production de gaz naturel synthétique à faible température étant exécutée en aval en série à partir de l'unité de production de gaz naturel synthétique à température élevée ;
dans lequel, dans l'étape de production de gaz naturel synthétique à température élevée, les réactions sont exécutées à la température élevée de 350 °C à 500 °C, et dans l'étape de production de gaz naturel synthétique à faible température, les réactions sont exécutées à la faible température de 250 °C à 350 °C ; et
dans lequel l'étape de production d'hydrogène inclut : une étape d'évaporation pour faire évaporer le composé aromatique hydrogéné en utilisant de la chaleur fournie par l'étape de production de gaz naturel synthétique à faible température, l'étape de production de gaz naturel synthétique à faible température fournissant de la chaleur à l'étape de production de gaz naturel synthétique à température élevée et à l'étape d'évaporation ; une étape de réaction de déshydrogénation pour produire de l'hydrogène, par une réaction de déshydrogénation en utilisant de la chaleur fournie par l'étape de production de gaz naturel synthétique à température élevée, à partir du composé aromatique hydrogéné évaporé par l'étape d'évaporation ; et une étape de chauffe pour chauffer, en utilisant de la chaleur fournie par l'étape de production de gaz naturel synthétique à température élevée, le composé aromatique hydrogéné évaporé par l'évaporateur, l'étape de chauffe étant exécutée entre l'étape d'évaporation et l'étape de réaction de déshydrogénation.

9. Procédé de production d'hydrogène et de gaz naturel synthétique selon la revendication 8, comprenant en outre une étape de génération d'alimentation électrique pour convertir de l'énergie obtenue par la combustion de combustible fossile en alimentation électrique ;
dans lequel l'étape de production de gaz naturel synthétique est adaptée pour produire du gaz naturel synthétique par la réaction de conversion inverse et la réaction de méthanisation de dioxyde de carbone contenu dans le gaz d'échappement produit par combustion dans l'étape de génération d'alimentation électrique et d'hydrogène produit par l'étape de production d'hydrogène ; et
l'étape de génération d'alimentation électrique est adaptée pour brûler le gaz naturel synthétique produit par l'étape de production de gaz naturel synthétique en même temps que le combustible fossile.
